# EUROPEAN PATENT SPECIFICATION

(11) **EP 2 537 629 B1**
(45) Date of publication and mention of the grant of the patent: **16.07.2014**
(21) Application number: 10846007.2
(22) Date of filing: 18.02.2010
(51) Int. Cl.: B23Q 3/155, B23Q 3/157

(54) **EQUIPMENT FOR THE EXCHANGE OF REPLACEABLE COMPONENTS IN MACHINE TOOLS**
AUSRÜSTUNG ZUM AUSWECHSELN VON AUSTAUSCHBAREN BESTANDTEILEN IN WERKZEUGMASCHINEN
ÉQUIPEMENT POUR LE CHANGEMENT D'ÉLÉMENTS REMPLAÇABLES DANS DES MACHINES-OUTILS

(43) Date of publication of application: 26.12.2012
(73) Proprietor: GMTK Multi-Process Machining S.A., Zestoa (Guipúzcoa) (ES)
(72) Inventor: ARANA GÁRATE, Jon, 20.600 eibar (Guipúzcoa) (ES); ECEIZA AGOTE, Patxi, 20.800 Zarautz (Guipúzcoa) (ES)
(74) Representative: Gonzalez-Alberto Rodriguez, Natalia
(86) International application number: PCT/ES2010/000070
(87) International publication number: WO 2011/101496

(56) References cited:
- EP-A1- 0 128 487
- EP-A1- 1 985 411
- DE-C1- 19 515 041
- DE-U1- 29 821 047
- FR-A1- 2 467 052
- GB-A- 2 075 893
- GB-A- 2 127 719

## Description

### Object of the Invention

The present invention, equipment for the exchange of replaceable components in machine tools relates, as the title indicates, to equipment for the automatic exchange of different components of different categories (machining heads, tool holders and tools) in machine tools. The purpose of the equipment is to allow, in a machine tool for example a vertical lathe or the like, the exchange of replaceable components of various categories therein, whether they are heads, tool holders or tools, for which said equipment essentially comprises a unified static storage, where all the replaceable components of the different categories are stored, and a single piece of manipulating equipment for said components automated and controlled by a control system, which is provided with freedom of movements and has at least one manipulator with gripping means suitable for gripping said replaceable components of different categories, such that said manipulator is capable of the movement, exchange and positioning thereof between the main axis or ram of the machine tool and the mentioned storage.

The field of application of the present invention is comprised within the technical sector of the industry dedicated to manufacturing machine tools, as well as equipment, machines and devices for the change of heads, tool holders and replaceable tools in machine tools.

### Background of the Invention

In the state of the art, equipment is known for the exchange of tools in machine tools in which the manipulator and the gripping means for gripping the components to be replaced are formed such that they can only carry out the change of a replaceable component of a single category, i.e., tools or heads or tool holders.

In the state of the art, manipulating equipment or robots are known which, by means of two clamps, exclusively jaw and transport tools from a storage to the main axis or ram of a machine tool and vice versa, their application being limited solely to the change of tools. This fact involves a drawback since in many machine tools it is necessary to not only carry out the change of tools for performing different operations, but it is also necessary to carry out the change of the head or tool holder, which operations must be performed automatically by means of other independent equipment or manually, with the consequent loss of time that this involves. These types of devices are described in the state of the art documents numbers DE29821047U1, EP01985411A1, EP0128487A1 and GB2075893A.

Prior art document DE29821047U1 describes an equipment for the change in machine tools with a ram of replaceable components with a single unified single static storage in which all the replaceable components are located and a single piece of manipulating equipment for said components, automated and controlled by a control system, said manipulating equipment having a single manipulator for the movement, exchange and positioning of the replaceable components between the ram of the machine tool and the storage. This document only refers to the change of tools, not to the change of tools and head or tool holders, as components of different categories, being provided with two different gripping devices in the manipulator for reducing the replacement time of components of different categories.

Likewise it is worth mentioning that the most used and known systems in the current state of the art for the exchange of tools in machines for vertical machining are the following:
- Circular rotary pick-up hung from the crossbeam of the machine: It is a common system in high vertical machining lathes incorporated by many manufacturers and has the advantage of being accessible from any position of the crossbeam, regardless of the height of the part, it has short runs for changing heads and allows combining heads with tools, when the tools are scarce. However, it has the drawback that it involves large weights hung from the crossbeam, which causes its torsion and, consequently, the loss of precision of the machine; it has weight limitations for heavy heads, as well as a limitation in the number of heads, because the more there are, the larger is the necessary diameter, whereby a larger crossbeam is required. Furthermore, when it is necessary to store and change a medium number of tools, other vertical carrousel type independent equipment is required.
- Circular rotary pick-up on the floor: It is a common system in small turning heights. It has the advantage of not having a limitation in the number of heads, because the diameter thereof is not limiting; nor does it have a weight limitation for heavy heads and it allows combining heads with tools, when there are few of them. However, it has the drawback that the pick-up may not be accessible from any position of the crossbeam when the height of the part in the machining process is greater than the course of the ram; when it is necessary to store and change a large number of tools, it requires other vertical carrousel type independent equipment; the runs are long for changing heads, the change times being increased and the floor space easement is large when there are many heads.
- Horizontal rotary carrousel on the floor: This system has the advantage of not being limited in the number of heads and allowing the combination of heads and many tools, however it requires an intermediate manipulator for heads and tool holders. Furthermore, in high turning machines, in order for it to be accessible from any position, it is necessary to greatly raise the structure on which the carrousel is supported such that the pick-up cannot be accessible from any position of the crossbeam when the height of the part in the machining process is greater than the course of the ram. It has limitations for the heads of a large weight and a large floor space easement.
- Circular rotary pick-up on the floor with raising: This system has the advantage of being accessible from any position of the crossbeam and allows combining heads with tools when there are few of them, however, it has the drawback that when it is necessary to store and change a large number of tools, it requires other vertical carrousel type independent equipment. Furthermore, in high machines, for changing in the highest positions of the crossbeam, a large disc raising course is necessary, therefore the weight of the heads and tools stored therein are limited.
- Carriage with translational movement on the floor: This system has the advantage of not having a limitation regarding the number of heads or regarding the weight thereof, however it may not be accessible from any position of the crossbeam when the height of the part in the machining process is greater than the course of the ram and, furthermore, other vertical carrousel type independent equipment is required for tools, involving a large floor space easement when there are many heads.
- Stationary pick-ups on the floor, independent for each head: This system has no limitation in the number of heads, in weight and it has a relatively low manufacturing cost, but it has the drawbacks that it requires an additional axis for the head to move to each of the pick-ups, it may furthermore not be accessible from any position of the crossbeam when the height of the part in the machining process is greater than the course of the ram. It requires independent equipment for tools, it has a large space easement and has longer runs for changing heads which worsen the change times.
- Fixed shelf and intermediate column-manipulator: This system has the advantage that the columnn acts as a robot and can change in any position of the machine, without limitation in the number of heads and the runs being short. However, the manufacturing cost is relatively high, it has a very large floor space easement when there are many heads and the maximum head weight for the manipulator is limited.

Therefore, an objective of the present invention is to provide to the state of the art a single piece of equipment for the movement, exchange and positioning of replaceable components of different categories in a machine tool, heads, tool holders as well as tools, in which the advantages of the known systems are incorporated and the aforementioned drawbacks are prevented, it being necessary to point out that the applicant does not know of the existence of any equipment having technical, structural and constituent characteristics similar to those of the equipment which is described in the present application.

### Description of the Invention

The equipment for the change of replaceable components of different categories thus allows carrying out not only the change of tools in a machine tool, but it also performs the change of heads or tool holders, when it is necessary.

Likewise, the equipment of the invention is advantageously capable of carrying out the change or replacement of tools in the same run or cycle of the manipulating equipment or robot in which the replacement of a head or tool holder is carried out, allowing to reduce the movements and operations of the manipulating equipment and, therefore, the time invested when the replacement of a head is necessary, prior to the change or replacement of one tool or more.

These and other objectives are achieved with the features of the equipment described and claimed herein, which as has been pointed out above essentially comprises one and the same unified static storage in which all the replaceable components are located regardless of their category, a single manipulating equipment or robot for said components which is automated and controlled by a control system, and which has at the free end of said manipulating equipment a single manipulator for the movement, exchange and positioning of the replaceable components of different categories between the main axis or ram of the machine tool and the storage. Both the storage and the manipulating equipment are independent and tight with respect to the machine tool for assuring the precision of all the movements of the manipulating equipment and that the replaceable components located in the storage are not affected by chips being projected from the machine tool which can affect the precision of the machining. Furthermore, the manipulating equipment and the storage are far from the machining area of the machine tool and are specifically located behind the horizontal movement axis of the ram.

Likewise, the manipulating equipment, located on an independent platform of the machine tool, is placed in an enclosure isolated from the operators while the machine tool is operating, and from said platform the manipulating equipment or robot accesses rotating around a vertical axis or moving longitudinally, allowing the replacement of a tool or head in the single changing position in the horizontal movement axis of the ram, but not in the vertical movement axis. The ram is accessed by means of the intermediate rigid arms of a fixed length of the manipulating equipment at the free end of which the manipulator is located, which end is opposite the base of the manipulating equipment located in the previous independent platform.

Said manipulator comprises at least one first gripping device for a first category of replaceable components, for example heads or tool holders,and at least one second gripping device for a second category of components, for example, tools.

Said first gripping device has a jaw or yoke with a concave inner cavity and anchoring and gripping means for bracing a component of a first category, i.e., a head or a tool holder, allowing its transport from the main axis or ram of the machine tool to the storage and vicec versa.

Likewise, the second gripping device present in the manipulator has at least one clamp, located on one side of the first gripping device, capable of gripping and transporting a second component category, i.e., tools, from the storage to the machine tool and vice versa. This second gripping device can be double, i.e., it can have two clamps, between which the first gripping device is located.

The concave conformation of the first gripping device also has anchoring and gripping means for the head or tool holder, which are located in the concave contour of the mentioned conformation or in a position adjacent to said contour. These anchoring and gripping means can consist, for example, of fixed pins and/or of retractable pawls or pins protruding from the manipulator, either from the contour of the conformation or in positions adjacent to said contour.

The components of the first category, i.e., heads or tool holders, have at one of their ends one and the same attaching flange designed to be coupled to the ram of the machine tool as well as to be gripped and transported by the first gripping device of the manipulator. Said attaching flange has for its coupling, both to the first gripping device as well as to the yokes located in the storage, means complementary to those described above. These replaceable components of first category have characteristics, mainly regarding dimensions and weight, which are completely different from one another and also different from the characteristics of the components of second category, which has caused the manipulation by one and the same piece of manipulating equipment for two categories of replaceable components to have been unviable up until the development of the present equipment.

Likewise, the manipulator also incorporates at least one proximity detector for detecting the presence of any replaceable component, head/tool holder or tool, when it moves closer to the storage, thus preventing possible collisions between the component gripped by the manipulator and a component located in the storage when the manipulator is going to leave a component.

In relation to the unified static storage in which the components of different categories to be replaced are located, it has at least two levels, or shelves. At least one of said levels has a preferably circular arc configuration such that they determine a series of housings for receiving cups where the replaceable components of the second category or tools will subsequently be incorporated.

Likewise, at least one of said levels of the unified storage consists of a platform with side openings which open out towards the side occupied by the manipulating equipment and which are sized to frontally receive and brace a replaceable component of the second category, head or tool holder. These side openings can have retaining means for the replaceable component which they must store, for example, yokes or jaws especially designed for that purpose. The levels with these yokes or jaws will be especially designed for storing heads or tool holders. The jaws which serve as retaining means for the replaceable components of first category in the storage are preferably made up of plates which are fixed on at least one level of the storage and have, from one of their edges, the one which is directed towards the manipulating equipment, a notch sized to brace a replaceable component, this contour being provided with stops or guides or supports, or a combination of any of the above, for gripping said component

In addition, and to perform the operations for loading and unloading the different categories of components in the storage, the equipment contemplates the existence of a storage loading station, located adjacently thereto and provided with preferably manual rotation means for accessing the isolated enclosure where the platform of the manipulating equipment and the storage are located. Said loading station is equipped with at least one yoke or jaw for locating heads or tool holders and with at least two cups for housing tools, identical to those incorporated in the storage. By means of the rotation of the loading station, the latter can be manually loaded with the components to be included in the storage from the outside in order to subsequently and after rotating it locate the jaw and the cups in the isolated enclosure, where the manipulator will be able to take the components from the loading station and transfer them to the storage, and vice versa, when the jaw and cups of the loading station are empty. The tasks for the preparation of everything necessary for the following machining operations are thus facilitated, since said preparation can be performed while the machine is machining, provided that it does not coincide with a programmed change cycle.

In summary, in this storage loading and unloading station, configured as a rotary structure with preferably manual rotation means, a first position, in which the replaceable components are placed or removed manually therein, and a second position, in which said components can be placed or picked up by the manipulator of the robot from or to the storage, are contemplated.

Therefore, with the described constitution, the equipment of the invention allows carrying out the replacement of tools but also of heads or tool holders in a machine tool, all this such that the manipulating equipment can transport a head or tool holder and one or two tools in the manipulator, the latter case being for the movement of tools from the loading station to the storage and vice versa. The tool and the head or tool holder can be transported in the same operation by the manipulator when it is necessary to replace a head or tool holder, all this by means of a single operation for accessing the manipulating equipment from the storage to the point of replacement of the head or tool holder and of the transported tool.

Furthermore, since there is a single unified storage for the tools and for the heads or tool holders, the runs are shorter for leaving and taking said components in any change, which improves the change times; the manual loading of all the components necessary for any machining operation is facilitated, while the machine works; the accessibility to the heads/tool holders and to the tools for performing maintenance work therein is facilitated and the management and the control of all the components necessary for any machining operation are facilitated.

In addition, the existence of a single manipulator for changing heads or tool holders and tools has a great advantage over conventional equipment which requires two independent pieces of equipment, since an intermediate manipulator for heads or tool holders is not necessary, the necessary movements of the manipulating equipment and thus the times of change are reduced, using a single management software, implemented in a control system, the probability of failures is reduced, since the number of necessary actions and manoeuvring signals is smaller, furthermore facilitating the maintenance of the assembly.

Other advantages of the equipment worth mentioning is the fact that the heads or tool holders are accessible for change from any position of the crossbeam, also in high turning machines, there being no limitation in the number or in the weight of heads or tool holders and tools, nor a large floor space easement.

It is also worth mentioning that the equipment contemplates the tightness with respect to the machining area of the machine tool, which closure assures the absence of chips on the heads or tool holders or tools, a very common drawback in other solutions and which entails unwanted effects in the machining, particularly since said chips in the components of first category, heads or tool holders, require a systematic cleaning before each change since the existence of chips has repercussions on the lack of repeatability in the coupling of the head or tool holder to the ram of the machine, detracting from the precision of the obtained machinings.

Finally, the joint location of the unified storage and of the manipulating equipment on the same side of the machine tool allows freeing up the space of the opposite side for part palletising systems and other auxiliary systems, which has great difficulties in most of the solutions used in the state of the art since it is necessary to use this space therein. Furthermore, the fact that the ananipulating equipment and the storage are located on the same side allows shortening the crossbeam on which the ram of the machine moves horizontally on the opposite side to where the manipulating equipment is located. This allows having a lighter crossbeam which facilitates the vertical movement thereof as well as reducing its manufacturing cost.

The operation process of the equipment for the change optimises the movements of the manipulating equipment between the storage and the ram of the machine tool, such that when it replaces from the ram the head or tool holder and the tool located therein, the method followed for the change can consist of:
- the manipulator in a single movement picks up the replaceable component of a second category or tool and subsequently the component of a first category, head or tool holder, from the ram of the machine tool,
- said manipulator moves to the storage and deposits the head or tool holder and subsequently the tool in its position,
- said manipulator takes a new tool and subsequently a new head or tool holder from the storage, and finally
- said manipulator couples the head or tool holder and subsequently the tool in the ram of the machine.

It is worth mentioning that between each change of a replaceable component for another component, the head or tool holder located in the ram of the machine tool must always be in its change position, i.e., in its single change position in the horizontal movement axis of the ram, but not in the vertical movement axis thereof, and the orientation of the tool must always be the same according to the characteristics of the head or of the tool holder.

### Description of the Drawings

To complement the present description and for the purpose of aiding to better understand the features of the invention, a set of drawings is attached as an integral part thereof, in which the following has been depicted with an illustrative and non-limiting character:
Figure 1 shows a perspective view of a machine tool with the equipment object of the present invention.
Figure 2 shows a plan view of an embodiment of equipment for the change of replaceable components in machine tools, according to the invention, in which it has been depicted with the manipulating equipment or robot positioned for taking the component or components to be replaced from the storage, the main parts and elements comprised in said equipment being observed therein.
Figure 3 shows a view similar to Figure 1, with the manipulating equipment positioned for coupling and/or picking up a replaceable component from the machine tool
Figure 4 shows a perspective view of the manipulator with which the manipulating equipment is provided which includes the equipment of the invention, the different retaining elements which it has both for tools and for heads or tool holders being observed.
Figure 5 shows a possible structure of the storage and platform which supports the manipulating equipment of the invention depicted in Figures 1 and 2.
Figure 6 shows a perspective view of one of the yokes or jaws provided in some of the levels of the storage for housing and retaining components of the first category, i.e., heads or tool holders
Figure 7 shows a detail of the loading and unloading station for loading and unloading the components in the storage

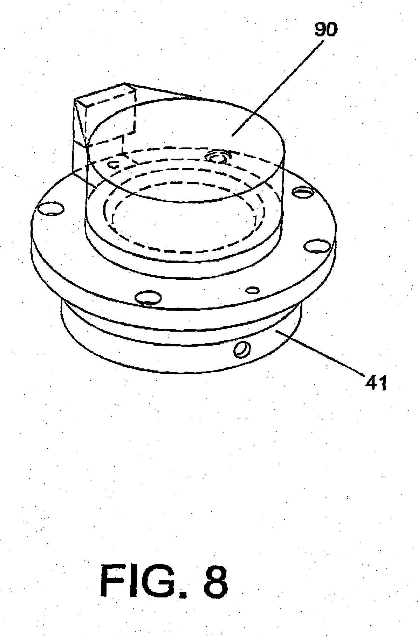

Figure 8 shows a detail of a cup for depositing the tool and a tool.

### Preferred Embodiment of the Invention

In view of the mentioned figures, and according to the numbering adopted, a preferred embodiment of the invention can be observed therein, which comprises the parts and elements which are indicated and described in detail below.

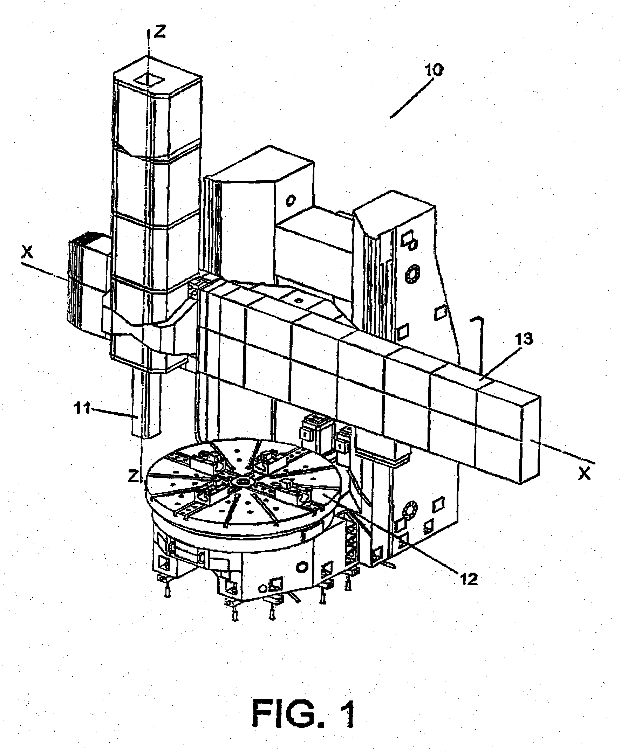

Thus,as shown in Figures 1 to 3, the equipment for the change of replaceable components in machine tools which is described comprises a unified storage (40) and manipulating equipment (20) by means of which the change of replaceable components of the different categories, heads or tool holders and tools, will be carried out, both the storage (40) and the manipulating equipment (20) being independent and tight with respect to the machine tool (10), there furthermore being a loading and unloading station (30) for said components on one of the sides of said storage (40). Said manipulating equipment (20), with a constitution known in itself, will have a series of degrees of freedom of movements, sufficient to perform the different operations for replacing the replaceable components of the machine tool (10). Said machine tool (10) has, among other components, a main axis or ram (11) which moves vertically, a horizontal crossbeam (13) along which the ram (11) moves horizontally and a machining area (12) where the part to be machined is located.

Both the storage (40) and the manipulating equipment (20) are independent and tight with respect to the machine tool (10) for assuring the precision of all the movements of the manipulating equipment (20) and that the replaceable components (80, 90) located in the storage (40) are not affected by chips being projected from the machining area (12) of the machine tool (10) which can affect the precision of the machining. Furthermore, the manipulating equipment (20) and the storage (40) are far from the machining area (12) of the machine tool (10) and are specifically located behind the horizontal movement axis (X axis) of the ram (11).

The storage (40) can have one or more levels (43, 45) for placing the two categories (80, 90) of components to be replaced, whereas the manipulating equipment (20) will be provided with a series of degrees of freedom of movement which allow it to access the different replaceable components located in said storage (40), and transport them to the position where these components must be assembled in the ram (11) of the machine tool (10) and vice versa, or to the loading and unloading station (30) in order to locate them in the storage (40) or vice versa. Said change position of components in the ram (11) is a single one in the horizontal movement axis thereof (11), X axis, but not in the vertical movement axis thereof, Z axis.

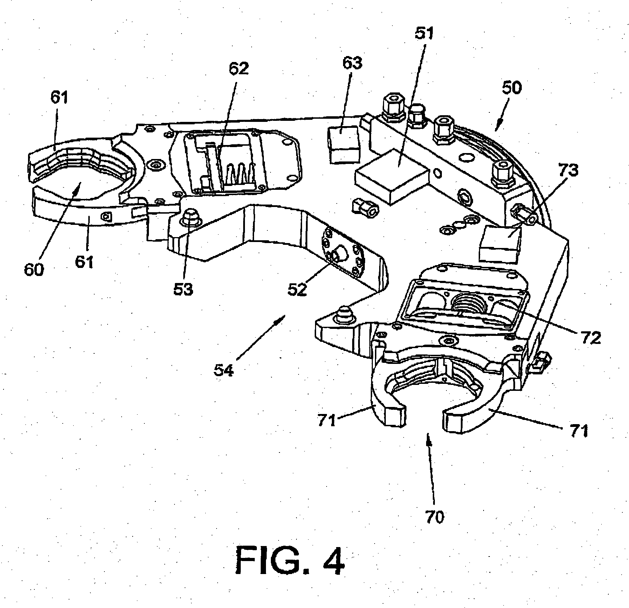

In order to perform the operations for gripping and transporting the components to be replaced from the storage (40) to the machine tool (10) and from said machine tool (10) to the storage (40), as well as from the loading and unloading station (30) to the storage (40) and vice versa, the manipulating equipment or robot (20) has at least one manipulator (50), which is shown in a perspective view in Figure 4, which has a first gripping device (54) for a first category.of replaceable components, such as the heads and tool holders (80) and a second gripping device (60, 70) for a second category of components.

Said second gripping device (60, 70) is formed by two clamps (60, 70), the arms (61, 71) of which can be opened and closed by different mechanisms (62, 72), mainly a combination of a hydraulic system and springs, although other known systems such as hydraulic or pneumatic cylinders, springs, electromagnetic actuators, or a combination of the above, among others, could also be used. The manipulator (50) will be connected in an articulated manner to the free end of the manipulating equipment (20) as well as to the corresponding control and power supply sources, said clamps (61, 71) being intended for gripping components of the second category, i.e., tools (90).

Likewise, the first gripping device (54),located between the mentioned clamps (60 and 70) is formed in the depicted example by an intermediate conformation (54), which is sized to brace a replaceable head or tool holder (80) of a machine tool (10), i.e., suitable for the replaceable components of first category. This conformation (54) has anchoring and gripping means for the head or tool holder (80) which it must transport, which means can consist of, for example, fixed pins (53) and/or retractable pins (52), located in coincidence with the contour of the conformation (54) or arranged in an position adjacent to said contour.

The manipulator (50) is equipped with proximity detectors (51, 63, 73) installed in each of the clamps (60, 70) as well as in the grip for heads or tool holders made up of the intermediate conformation (54), being intended for detecting the unexpected presence of components in the storage (40) and preventing possible collisions when the manipulator (50) moves closer to said storage (40) in order to deposit a component of any category.

The components of the first category, i.e., heads or tool holders (80)., have at one of their ends one and the same attaching flange designed to be coupled to the ram (11) of the machine tool (10) as well as to be gripped and transported in the intermediate conformation (54). Said attaching flange has for its coupling, both to the intermediate conformation (54) with fixed pins (53) and/or retractable pins (52) as well as to the yokes (42) located in the storage, means complementary to those described above.

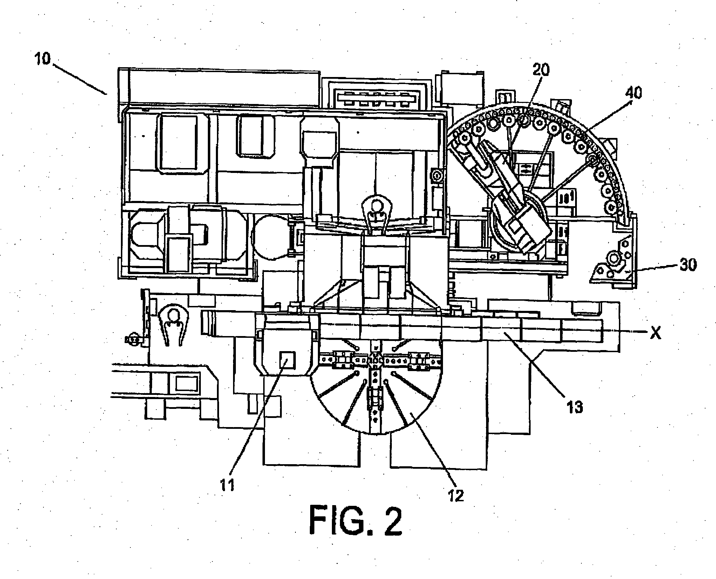

Due to the constitution of the manipulator (50), according to the invention, to start operating, the manipulating equipment (20) can pick up from the storage (40), in the situation of Figure 2, a first tool holder or head (80), through the conformation (54) of the manipulator, and a first tool (90) by means of the clamps (60 or 70), moving this assembly to the ram (11) of the machine tool (10) in which it will perform, on the main axis or ram (11) thereof, firstly the placement of the first head or tool holder (80) and then the placement of the first tool (90) picked up from the storage (40). Once the use of that first tool (90) has ended, and after the manipulator (50) has returned to the storage (40) to pick up a second tool, assuming that the first head (80) is maintained, the manipulator (50) removes the first tool (90) from the ram (11) and then places the second tool picked up from the storage (40) last of all. It then removes the first tool (90) to the storage (40). If in the following work step of the machine (10) it is necessary to change both the tool and the head or tool holder, the manipulator (50) removes the second tool and the first head or tool holder (80) from the ram (11), and after leaving them in the storage (40), it picks up therefrom a second head or tool holder and a new tool which it places in the ram of the machine.

In summary, the particular process for the change of replaceable components of two categories would be the following:
- the manipulator (50) of the manipulating equipment (20), in one and the same movement, picks up a replaceable component of second category i.e., a tool (90), and subsequently a component of second category, i.e., a head or tool holder (80), from the ram (11) of the machine tool (10),,
- said manipulator (50) moves to the storage (40) and deposits the head or tool holder (80) and subsequently the tool (90) in the corresponding position,
- said manipulator (50) takes a new component of each category, i.e., one of head or tool holder type and one of tool type, from the storage (40),
- and finally, said manipulator (50) couples the tool holder or head component and subsequently the tool type component in the ram (11) of the machine tool (10).

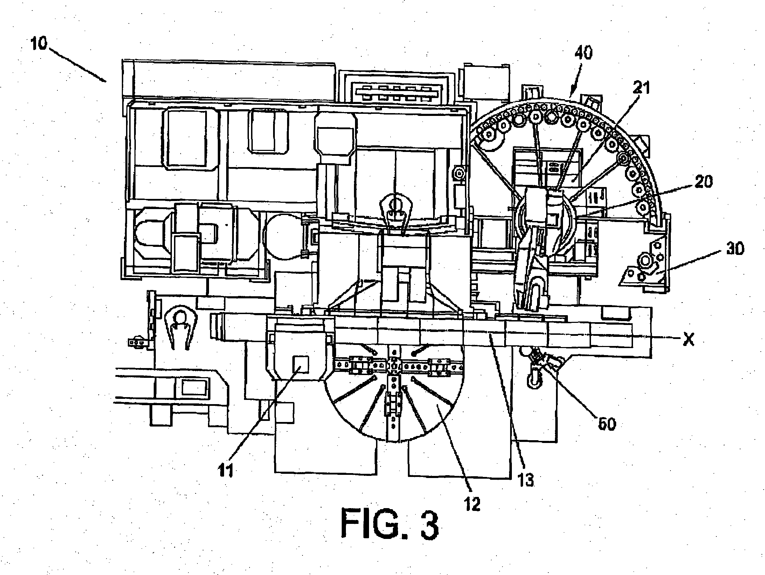

Figure 2 shows the manipulating equipment (20) in the position of access to the storage (40) for picking up a head or tool holder, if necessary, and a tool, which components it will move to the ram (11) of the machine tool (10), Figure 3, for the replacement or change of other replaceable components.

The manipulating equipment (20), for the movements between the storage (40), the loading and unloading station (30) and the machine tool (10) can require a rotational movement around a vertical axis or a movement along a horizontal path.

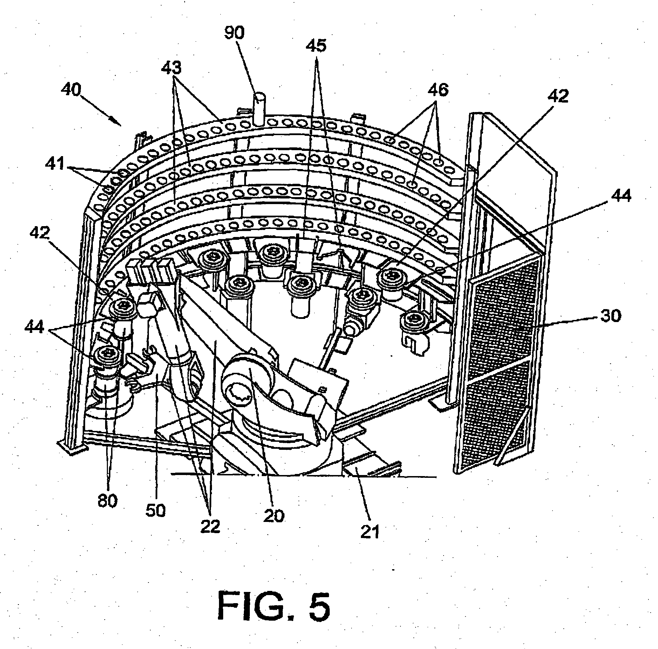

In the first case, i.e., in which it only requires the rotation, it has been provided that the manipulating equipment (20) is assembled on a platform (21) independent from the machine (10), as shown in Figure 5, and is connected to the storage (40) by means of rigid arms (22) of a fixed length. Furthermore, in said Figure 5 it can be seen how the storage (40), in a preferred of the invention, is made up of several levels (43), preferably with a circular arc configuration, part of which have housings (46) in which, arranged inside tool holder cups (41), the tools (90) forming one of the types of replaceable components in the machine tool (10) will be located.

Furthermore, one or more of the levels of the storage (40), which have been referenced with number 45 to distinguish them, have side openings (44) which open out towards the side occupied by the manipulating equipment(20) and which are sized to frontally receive and brace the other category of replaceable components, i.e., a head or tool holder (80).

Thus, as observed in the embodiment shown in Figure 5, the levels (43) with housings (46) will preferably be intended to receive and store tools (90), whereas the side openings (44) will be intended to receive heads or tool holders (90).

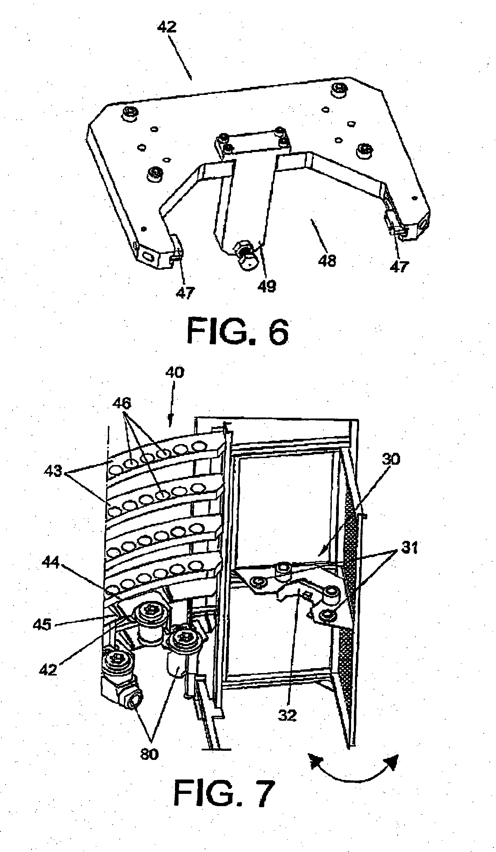

Furthermore, the existence of yokes or jaws (42) is contemplated in the mentioned side openings (44), which yokes or jaws, as shown in Figure 6, are made up of a considerably flat body having, from one of its edges, a notch (48) for receiving and bracing a replaceable component of the machine tool, especially a head or tool holder (80). Said notch (48) of the jaw or yoke (42) in turn has stops and supports (49) adapted to each replaceable component and guides (47) which will serve for positioning in a precise and repetitive manner, as well as means for gripping and retaining the component.

As has been indicated above, the manipulating equipment (20) will have the degrees of freedom of movements necessary for carrying out all the operations in the storage (40), in the loading and unloading station (30), as well as in the machine tool (10) and the movement between them in one direction or the other.

Therefore, to perform the operations for loading and unloading replaceable components, the loading and unloading station (30), located as has been mentioned adjacently to the storage (40), as shown in Figure 7, is a rotary structure provided with preferably manual rotation means, which is equipped with at least one yoke or jaw (32) for locating head or tool holder (80) type components and with several tool holder cups (31), identical to those incorporated in the storage (40), for housing tool (90) type components. Thus, in this loading and unloading station (30) a first position, in which the replaceable components are placed or removed manually, and a second position, in which said components are placed or picked up by the manipulator (50) of the manipulating equipment (20) from or to the storage (40), are contemplated

Finally, it must be pointed out that the equipment for the change of replaceable components in machine tools contemplates the use of a program with a code legible and/or executable by means of elements integrated in a control system which allows optimally managing the operations and movements of the manipulating equipment or robot (20) as well of the manipulator (50), for the purpose of moving, exchanging and positioning the replaceable components of different types between the ram (11) of the machine tool (10) and the storage (40) as well as between the storage (40) and the loading and unloading station (30).

Having sufficiently described the nature of the present invention, as well as the way of putting it into practice, it is not considered necessary to further extend its description for any person skilled in the art to understand its scope and the advantages derived therefrom, stating that, within its essence, it may be put into practice in other embodiments which differ in detail from the one indicated by way of example, and which are also covered by the appended claims.

## Claims

1. Equipment for the change in machine tools (10) with a ram (11) of replaceable components (80, 90) of different categories, such as heads or tool holders and tools, necessary for different machining operations, comprising a single unified single static storage (40), and a single piece of manipulating equipment (20) for said components (80, 90), automated and controlled by a control system, said manipulating equipment (20) having a single manipulator (50) for the movement, exchange and positioning of the replaceable components (80, 90) between the ram (11) of the machine tool (10) and the storage (40), **characterized in that**:
- all the replaceable components (80, 90) are located in the storage (40) regardless of their category (80, 90),
- the replaceable components (80, 90) of any of the different categories (80, 90) are moved, exchanged and positioned by the manipulator (50), and
- said manipulator (50) comprises at least two different gripping devices (54, 60, 70), one first gripping device (54) for a first category of replaceable components (80) and at least one second gripping device (60, 70) for a second category of components (90),
wherein the first category of replaceable components (80) are heads or tool holders and the second category of replaceable components (90) are tools.

2. The equipment according to claim 1, **characterised in that** the first gripping (54) device has a jaw or yoke (54) with a concave inner cavity and anchoring and gripping means (52, 53).

3. The equipment according to claim 1, **characterised in that** the second gripping device (60, 70) has at least one clamp (60, 70) by the first gripping device (54).

4. The equipment according to claim 3, **characterised in that** the manipulator (50) has a clamp (60, 70) on both sides of the first gripping device (54).

5. The equipment according to claim 1, **characterised in that** the first (54) and/or the second device (60, 70) have at least one device for detecting the unexpected presence of a replaceable component (80, 90) to prevent possible collisions when positioning a.component (80, 90) in the storage (40).

6. The equipment according to claim 2, **characterised in that** the anchoring and gripping means consist of at least one fixed or retractable pin (52, 53) located in the body of the jaw (54).

7. The equipment according to claim 1, **characterised in that** the manipulating equipment (20) is arranged on an independent platform of the machine tool and is connected with the storage (40) by means of rigid intermediate arms (22) of a fixed length which have the manipulator (50) at their free end.

8. The equipment according to claim 1, **characterised in that** the single storage (40) has at least one height or level (45) with concave openings (44) for frontally receiving and bracing a replaceable component of first category (80).

9. The equipment according to claim 8, **characterised in that** the retaining means for the replaceable components of first category (80) consist of a jaw (42) arranged in each opening (44), said jaw (42) having guiding, gripping and support means for said replaceable component.

10. The equipment according to claim 9, **characterised in that** said jaws (42) have a flat configuration, being supported and fixed on at least one height of the storage (45), coinciding with the openings (44) thereof, having from one of their edges a notch sized to brace a replaceable component, from the contour of which stops for gripping and guiding said component protrude.

11. The equipment according to claim 1, **characterised in that** it has a single exchange station (30) for loading and unloading said replaceable components (80, 90) in the storage (40), said station (30) having rotation means between a first position in which the replaceable components (80, 90) are manually placed in said station (30) and a second position in which the replaceable components (80, 90) are placed or removed from said single station (30) by means of the manipulating equipment (20).

12. The equipment according to claim 1, **characterised in that** the storage (40) and the manipulating equipment (20) are independent and tight with respect to the machine tool (10).

13. The equipment according to claim 1 or 12, **characterised in that** the storage (40) and the manipulating equipment (20) are located on a side of the machining area and behind the horizontal movement axis (X axis) of the ram (11) of said machine, i.e., on the side opposite that of the machining area.

14. The equipment, according to claim 1, **characterised in that** it comprises at least a second manipulator.

15. A method for the change of two replaceable components of two different categories (80, 90), between heads, tool holders or tools, of the ram (11) of a machine tool (10) ; by means of equipment according to claims 1 to 14 wherein the first category of replaceable components (80) are heads or tool holders and the second category of replaceable components (90) are tools, **characterised in that**,
- the manipulator (50) in a single movement picks up a replaceable component of a second category (90) and subsequently of a first category (80) from the ram (11) of the machine tool (10),
- said manipulator (50) moves to the storage (40) and deposits the component of first category (80) and subsequently the component of second category (90) in its position,
- said manipulator (50) takes a new component of second category (90) and subsequently a new component of first category (80) from the storage (40), and
- said manipulator couples the component of first category (80) and subsequently the component of second category (90) in the ram (11) of the machine (10).

16. A computer program for the change in machine tools of replaceable components of different categories (80, 90), such as heads or tool holders and tools, **characterised in that** it allows carrying out the operations of the method according to claim 15.

## Patentansprüche

1. Ausrüstung zum Wechseln in Werkzeugmaschinen (10) mit einem Stößel (11) von austauschbaren Bestandteilen (80, 90) verschiedener Klassen, wie Köpfen oder Werkzeughaltern und Werkzeugen, die für verschiedenen Bearbeitungsvorgänge nötig sind, umfassend ein einziges vereinheitlichtes statisches Lager (40), und eine einzige Manipulierungsausrüstung (20) für die genannten Bestandteile (80, 90), welche von einem Steuersystem automatisiert und gesteuert wird, wobei die genannte Manipulierungsausrüstung (20) einen einzigen Manipulator (50) für die Bewegung, das Auswechseln und die Positionierung der austauschbaren Bestandteile (80, 90) zwischen dem Stößel (11) der Werkzeugmaschine (10) und dem Lager (40), **dadurch gekennzeichnet, dass**:
- sich alle austauschbaren Bestandteile (80, 90) in dem Lager (40) befinden, unabhängig von ihrer Klasse (80, 90),
- die austauschbaren Bestandteile (80, 90) jeder der verschiedenen Klassen (80, 90) von dem Manipulator (50) bewegt, ausgewechselt und positioniert werden, und
- der genannte Manipulator (50) mindestens zwei verschiedene Greifvorrichtungen (54, 60, 70) umfasst, eine erste Greifvorrichtung (54) für eine erste Klasse von austauschbaren Bestandteilen (80) und mindestens eine zweite Greifvorrichtung (60, 70) für eine zweite Klasse von Bestandteilen (90),
wobei die erste Klasse von austauschbaren Bestandteilen (80) Köpfe oder Werkzeughalter und die zweite Klasse von austauschbaren Bestandteilen (90) Werkzeuge sind.

2. Ausrüstung nach Anspruch 1, **dadurch gekennzeichnet, dass** die erste Greifvorrichtung (54) eine Backe oder ein Joch (54) mit einer konkaven inneren Aushöhlung und Anker- und Greifmittel (52, 53) aufweist.

3. Ausrüstung nach Anspruch 1, **dadurch gekennzeichnet, dass** die zweite Greifvorrichtung (60, 70) mindestens eine Klemme (60, 70) von der ersten Greifvorrichtung (54) aufweist.

4. Ausrüstung nach Anspruch 3, **dadurch gekennzeichnet, dass** der Manipulator (50) eine Klemme (60, 70) auf beiden Seiten der ersten Greifvorrichtung (54) aufweist.

5. Ausrüstung nach Anspruch 1, **dadurch gekennzeichnet, dass** die erste Vorrichtung (54) und/oder die zweite Vorrichtung (60, 70) mindestens eine Vorrichtung für die Erfassung der unerwarteten Anwesenheit eines austauschbaren Bestandteils (80, 90) aufweisen, um mögliche Zusammenstoße zu verhindern, wenn ein Bestandteil (80, 90) in das Lager (40) positioniert wird.

6. Ausrüstung nach Anspruch 2, **dadurch gekennzeichnet, dass** die Anker- und Greifmittel aus mindestens einem festen oder einziehbaren Stift (52, 53), welcher sich in dem Körper der Backe (54) befindet, bestehen.

7. Ausrüstung nach Anspruch 1, **dadurch gekennzeichnet, dass** die Manipulierungsausrüstung (20) auf einer separaten Plattform der Werkzeugmaschine angeordnet und mit dem Lager (40) durch steife Zwischenarme (22) bestimmter Länge, die der Manipulator (50) an seinem freien Ende aufweist, angeschlossen ist.

8. Ausrüstung nach Anspruch 1, **dadurch gekennzeichnet, dass** das einzige Lager (40) mindestens eine Höhe oder Ebene (45) mit konkaven Öffnungen (44) für die frontale Aufnahme und Einspannung eines austauschbaren Bestandteils der ersten Klasse (80).

9. Ausrüstung nach Anspruch 8, **dadurch gekennzeichnet, dass** die Haltemittel für die austauschbaren Bestandteile der ersten Klasse (80) aus einer Backe (42) bestehen, welche in jeder Öffnung (44) angeordnet ist, wobei die genannte Backe (42) Führungs-, Greif- und Tragmittel für den genannten austauschbaren Bestandteil aufweist.

10. Ausrüstung nach Anspruch 9, **dadurch gekennzeichnet, dass** die genannten Backen (42) eine flache Ausbildung aufweisen, wobei sie auf mindestens einer Höhe des Lagers (45) getragen und befestigt sind, welche mit den Öffnungen (44) derselben zusammenfällt, und auf einem ihrer Ränder einen Einschnitt aufweisen, welcher für die Einspannung eines austauschbaren Bestandteils ausgemessen ist, wobei von der Kontur desselben Anschläge für das Greifen und die Führung des genannten Bestandteils herausragen.

11. Ausrüstung nach Anspruch 1, **dadurch gekennzeichnet, dass** sie eine einzige Auswechselstation (30) für die Beladung und Entladung der genannten austauschbaren Bestandteilen (80, 90) in den/aus dem Lager (40) aufweist, wobei die genannte Station (30) Rotationsmittel zwischen einer ersten Stellung, in welcher die austauschbaren Bestandteile (80, 90) in die genannte Station (30) manuell angebracht werden, und einer zweiten Stellung, in welcher die austauschbaren Bestandteile (80, 90) in die/von der genannte/n einzige/n Station (30) mit der Manipulierungsausrüstung (20) angebracht oder entfernt werden.

12. Ausrüstung nach Anspruch 1, **dadurch gekennzeichnet, dass** das Lager (40) und die Manipulierungsausrüstung (20) in Bezug auf die Werkzeugmaschine (10) unabhängig und dicht sind.

13. Ausrüstung nach Anspruch 1 oder 12, **dadurch gekennzeichnet, dass** sich das Lager (40) und die Manipulierungsausrüstung (20) auf einer Seite des Bearbeitungsbereichs und hinter der horizontalen Bewegungsachse (x-Achse) des Stößels (11) der genannten Maschine befinden, das heißt, auf der Seite, die der Seite des Bearbeitungsbereichs gegenüberliegt.

14. Ausrüstung nach Anspruch 1, **dadurch gekennzeichnet, dass** sie mindestens einen zweiten Manipulator umfasst.

15. Verfahren zum Wechseln von zwei austauschbaren Bestandteilen von zwei verschiedenen Klassen (80, 90), zwischen Köpfen, Werkzeughaltern oder Werkzeugen, von dem Stößel (11) einer Werkzeugmaschine (10), durch eine Ausrüstung nach den Ansprüchen 1 bis 14, wobei die erste Klasse von austauschbaren Bestandteilen (80) Köpfe oder Werkzeughalter und die zweite Klasse von austauschbaren Bestandteilen (90) Werkzeuge sind, **dadurch gekennzeichnet, dass**
- der Manipulator (50) in einer einzigen Bewegung einen austauschbaren Bestandteil einer zweiten Klasse (90) und danach eines einer ersten Klasse (80) von dem Stößel (11) der Werkzeugmaschine (10) fasst,
- sich der genannte Manipulator (50) zum Lager (40) bewegt und den Bestandteil der ersten Klasse (80) und danach den Bestandteil der zweiten Klasse (90) in ihre Stellung ablegt,
- der genannte Manipulator (50) einen neuen Bestandteil der zweiten Klasse (90) und danach einen neuen Bestandteil der ersten Klasse (80) aus dem Lager (40) nimmt, und
- der genannte Manipulator den Bestandteil der ersten Klasse (80) und danach den Bestandteil der zweiten Klasse (90) in dem Stößel (11) der Maschine (10) koppelt.

16. Computerprogramm zum Wechseln in Werkzeugmaschinen von austauschbaren Bestandteilen von verschiedenen Klassen (80, 90), wie Köpfe oder Werkzeughalter und Werkzeuge, **dadurch gekennzeichnet, dass** es die Vorgänge des Verfahrens nach Anspruch 15 ermöglicht.

## Revendications

1. Équipement pour le changement, dans des machines-outils (10) avec un coulisseau (11), d'éléments remplaçables (80, 90) de différentes catégories, tels que des têtes ou porte-outils et des outils, nécessaires pour différentes opérations d'usinage, comprenant un seul magasin statique unifié (40') et un seul équipement de manipulation (20) pour lesdits éléments (80, 90), automatisé et contrôlé par un système de contrôle, ledit équipement de manipulation (20) ayant un seul manipulateur (50) pour le déplacement, échange et positionnement des éléments remplaçables (80, 90) entre le coulisseau (11) de la machine-outil (10) et le magasin (40), **caractérisé en ce que** :
- tous les éléments remplaçables (80, 90) sont situés dans le magasin (40) indépendamment de leur catégorie (80, 90),
- les éléments remplaçables (80, 90) de l'une quelconque des différentes catégories (80, 90) sont déplacés, échangés et positionnés par le manipulateur (50), et
- ledit manipulateur (50) comprend au moins deux dispositifs de préhension (54, 60, 70) différents, un premier dispositif de préhension (54) pour une première catégorie d'éléments remplaçables (80) et au moins un deuxième dispositif de préhension (60, 70) pour une deuxième catégorie d'éléments (90),
dans lequel la première catégorie d'éléments remplaçables (80) sont des têtes ou des porte-outils et la deuxième catégorie d'éléments remplaçables (90) sont des outils.

2. Équipement selon la revendication 1, **caractérisé en ce que** le premier dispositif de préhension (54) possède une mâchoire ou chape (54) avec une cavité intérieure concave et des moyens d'ancrage et de préhension (52, 53).

3. Équipement selon la revendication 1, **caractérisé en ce que** le deuxième dispositif de préhension (60, 70) possède au moins une pince (60, 70) par le premier dispositif de préhension (54).

4. Équipement selon la revendication 3, **caractérisé en ce que** le manipulateur (50) possède une pince (60, 70) de part et d'autre du premier dispositif de préhension (54).

5. Équipement selon la revendication 1, **caractérisé en ce que** le premier (54) et/ou le deuxième dispositif (60, 70) possèdent au moins un dispositif pour détecter la présence intempestive d'un élément remplaçable (80, 90) pour éviter des collisions éventuelles lorsque l'on positionne un élément (80, 90) dans le magasin (40).

6. Équipement selon la revendication 2, **caractérisé en ce que** les moyens d'ancrage et de préhension consistent en au moins une broche fixe ou rétractile (52, 53) située dans le corps de la mâchoire (54).

7. Équipement selon la revendication 1, **caractérisé en ce que** l'équipement de manipulation (20) est aménagé sur une plate-forme indépendante de la machine-outil et est relié au magasin (40) par le biais de bras intermédiaires rigides (22) d'une longitude fixe qui ont le manipulateur (50) à leurs extrémités libres.

8. Équipement selon la revendication 1, **caractérisé en ce que** le magasin unique (40) possède au moins une hauteur ou un niveau (45) avec des ouvertures concaves (44) pour recevoir frontalement et atteler un élément remplaçable de la première catégorie (80).

9. Équipement selon la revendication 8, **caractérisé en ce que** les moyens de rétention pour les éléments remplaçables de première catégorie (80) consistent en une mâchoire (42) aménagée dans chaque ouverture (44), ladite mâchoire (42) ayant des moyens de guidage, préhension et support pour ledit élément remplaçable.

10. Équipement selon la revendication 9, **caractérisé en ce que** lesdites mâchoires (42) ont une configuration plane, étant supportées et fixées sur au moins une hauteur du magasin (45), en coïncidence avec les ouvertures (44) de celle-ci, en ayant à partir d'un de ses bords une entaille dimensionnée pour atteler un élément remplaçable, sur le contour de laquelle sont en saillie des butées pour saisir et guider ledit élément.

11. Équipement selon la revendication 1, **caractérisé en ce qu'**il a une seule station d'échange (30) pour charger et décharger lesdits éléments remplaçables (80, 90) dans le magasin (40), ladite station (30) ayant des moyens de rotation entre une première position dans laquelle les éléments remplaçables (80, 90) sont mis en place manuellement dans ladite station (30) et une deuxième position dans laquelle les éléments remplaçables (80, 90) sont mis en place ou retirés de ladite station unique (30) au moyen de l'équipement de manipulation (20).

12. Équipement selon la revendication 1, **caractérisé en ce que** le magasin (40) et l'équipement de manipulation (20) sont indépendants et serrés par rapport à la machine-outil (10).

13. Équipement selon la revendication 1 ou 12, **caractérisé en ce que** le magasin (40) et l'équipement de manipulation (20) sont situés sur un côté de la zone d'usinage et derrière l'axe de déplacement horizontal (axe X) du coulisseau (11) de ladite machine, c'est-à-dire, sur le côté en regard de celui de la zone d'usinage.

14. Équipement selon la revendication 1, **caractérisé en ce qu'**il comprend au moins un deuxième manipulateur.

15. Procédé pour l'échange de deux éléments remplaçables de deux catégories différentes (80, 90), entre des têtes, porte-outils ou outils, du coulisseau (11) d'une machine-outil (19), au moyen de l'équipement selon les revendications 1 à 14, dans lequel la première catégorie d'éléments remplaçables (80) sont des têtes ou porte-outils et la deuxième catégorie d'éléments remplaçables (90) sont des outils, **caractérisé en ce que**
- le manipulateur (50) en un seul déplacement prenne un élément remplaçable d'une deuxième catégorie (90) et ensuite d'une première catégorie (90) du coulisseau (11) de la machine-outil (10),
- ledit manipulateur (50) se déplace au magasin (40) et dépose l'élément de première catégorie (80) et ensuite l'élément de deuxième catégorie (90) en place,
- ledit manipulateur (50) saisit un nouveau élément de deuxième catégorie (90) et ensuite un nouveau élément de première catégorie (80) du magasin (40), et
- ledit manipulateur couple l'élément de première catégorie (80) et ensuite l'élément de deuxième catégorie (90) dans le coulisseau (11) de la machine (10).

16. Programme d'ordinateur pour le changement, dans des machines-outils, d'éléments remplaçables de différentes catégories (80, 90), tels que des têtes ou porte-outils et des outils, **caractérisé en ce qu'**il permet la réalisation des opérations du procédé selon la revendication 15.
